# EUROPEAN PATENT SPECIFICATION

(11) **EP 0 492 879 B1**
(45) Date of publication and mention of the grant of the patent: **28.02.1996**
(21) Application number: 91311446.8
(22) Date of filing: 09.12.1991
(51) Int. Cl.: B01J 20/28

(54) **A gas adsorbing element, its manufacture method and usage**
Gasadsorptionselement, dessen Herstellungsmethode und Verwendung
Elément d'adsorption de gaz, sa méthode de fabrication et son usage

(30) Priority: 25.12.1990 JP 418383/90
(43) Date of publication of application: 01.07.1992
(73) Proprietor: KABUSHIKI KAISHA SEIBU GIKEN, Kasuya-gun, Fukuoka 811-24 (JP); Kuma, Toshimi, Fukuoka-shi Fukuoka 813 (JP)
(72) Inventor: Kuma, Toshimi, Fukuoka-shi, Fukuoka 813 (JP)
(74) Representative: Johnson, Terence Leslie

(56) References cited:
- DE-A- 3 819 727
- DE-A- 3 902 977
- DE-A- 3 937 863
- US-A- 3 091 550
- US-A- 3 261 473

## Description

### 1. Field of the Invention

The present invention relates to a gas adsorbing element, its manufacture method and use, which element has a honeycomb laminated structure with many small channels and with solid adsorbent appearing on each surface of the small channels, and through said small channels alternately a process gas, containing active gas, and a desorbing gas pass to adsorb and remove active gases such as organic solvent vapors or odor components in the process gas, to obtain a clean gas such as air continuously.

### 2. Description of the Prior Art

Zeolite has been used as adsorbent: For a honeycomb structure dehumidifier element, for example in the Japanese Patent Publication No. 19548/1979 ( laid open to public without examination ), a rotary reactivating dehumidifier is proposed which has a cylindrical honeycomb structure prepared by adhering molecular sieve ( 4A, 13X etc. ) to asbestos paper, glass fiber paper and so on and by corrugating and laminating the paper; on the other hand for a rotary adsorbing element that adsorbs and separates organic solvent vapor, odorous gas and so on from air, for example in the Japanese Patent Publication No. 50068/1978 ( laid open to public without examination ), a honeycomb structure element containing fibrous active carbon is proposed; and in the Japanese Patent Publication No. 56019/1982 (laid open to public without examination ), an element is described which is prepared by forming asbestos paper, containing powdery or fibrous active carbon, into honeycomb structure.

### 3. Summary of the Invention

Active carbon is considered to be a hydrophobic adsorbent and adsorbs with priority organic solvent vapor or odor component. But due to its inflammability there is danger of the outbreak of fire when hot air above 130 °C is used for reactivation. When organic material to be adsorbed is for example xylene, methyl-ethyl ketone or methyl-isobutyl ketone, large quantity of adsorption heat is generated and there is possibility of a honeycomb structure element, containing for example the above-mentioned fibrous active carbon, catching fire. Therefore reactivation temperature cannot be raised. On the other hand zeolite is a group of inorganic materials consisting of aluminosilicate and there is no possibility of catching fire even if hot air is used for desorption and reactivation or even if large quantity of adsorption heat is generated at the time of adsorption. It is called molecular sieve because it selectively adsorbs organic solvent vapors or odor components depending on effective entrance diameter of its micropore, polarity of adsorption field, for example. Thus zeolite is very effective in adsorbing particular materials or in adsorbing and removing, for example, very small amount of organic solvents vapor or odor components contained in the air. But in removing all of various kinds of organic solvent vapors or odor components contained simultaneously in the air to obtain clean air, it is not necessarily efficient. The efficiency of zeolite to adsorb methylene dichloride, toluene, gasoline, for example, is low. On the other hand active carbon has low efficiency of adsorbing methyl alcohol, ethyl alcohol, for example.

### 4. Brief Description of the Drawings

Fig. 1 is a perspective view showing an example of a gas adsorbing element;
Fig. 2 is a perspective view of a single-faced corrugated sheet;
Fig. 3 is a perspective view showing another example of a gas adsorbing element;
Fig. 4 is a perspective view showing still another example of a gas adsorbing element;
Fig. 5 is a partial cutaway perspective view showing an example of using a rotary gas-adsorbing element;
Fig. 6 is an explanatory view showing another example of using a rotary gas-adsorbing element;
Fig. 7 is a perspective view showing still another example of a gas adsorbing element;
Fig. 8 is an enlarged drawing of a microscopic part of the gas adsorbing element;
Fig. 9 is a further enlarged drawing of a part of the gas adsorbing element shown in Fig. 8;
Fig. 10 is a graph showing loss in weight of active carbon in the gas adsorbing element by heat;
Fig. 11 is a graph showing efficiency of a prior gas-adsorbing element;
Fig. 12 is a graph showing efficiency of a prior gas-adsorbing element; and
Fig. 13 is a graph showing efficiency of an example of a gas adsorbing element of the present invention.

### 5. Detailed Description of the Preferred Embodiments

The present invention provides a gas adsorbing element which is fabricated by holding zeolite powder, active carbon and solid component in an inorganic binder such as silica sol or alumina sol on a honeycomb laminated structure of inorganic fiber paper. The element is able to adsorb and remove various mixtures of organic solvent vapors and odor components contained in the air to obtain clean air without danger of active carbon catching fire by adsorption heat or heat of desorption/reactivation air and without danger of efficiency decrease by carrying-over of zeolite powder or active carbon powder due to passing of process air or reactivation air through honeycomb channels. The element is able to perform high efficiency for a long period of time with adsorption characteristics of zeolite and active carbon supplementing each other. It is preferable to remove organic component contained in the inorganic fiber paper or the adhesive for lamination by baking the honeycomb laminated structure at a high temperature in order to make sure the fire resisting quality of the element.

### Example 1

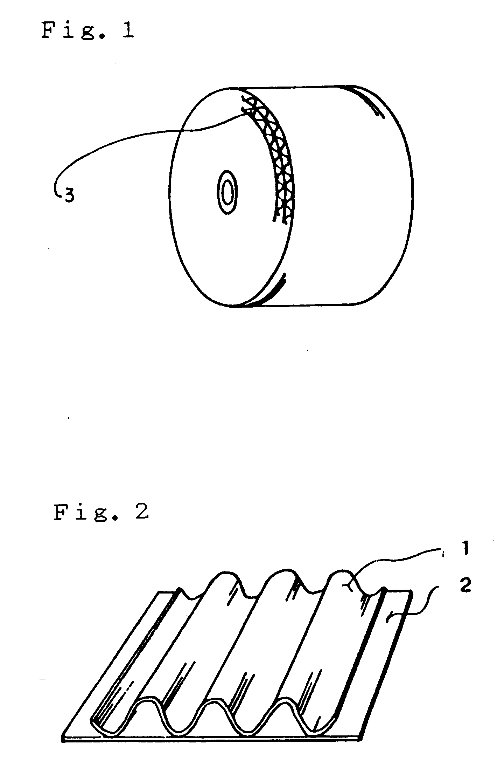

A very porous paper consisting of silica-alumina group ceramic fiber 70-90 %, pulp 5-20 % and binder 5-10 % ( ratios by weight ), 0.1-0.3 mm thick and 30-300 g/ m² weight, is corrugated as shown as 1 in Fig. 2. Said corrugated paper 1 and a flat paper 2 are adhered at the ridged portion of the corrugated paper 1 to obtain a single-faced corrugated sheet. As shown in Fig. 1 the single-faced corrugated sheet is wound and laminated to obtain a honeycomb laminated structure having many small channels 3 penetrating through between both end surfaces. This honeycomb laminated structure is put in a baking furnace and is baked for 5 hours by passing hot air of about 650 °C and of 1.5 m/sec. velocity with oxygen content less than 10 % through small channels 3 of the honeycomb to remove organic component and to make it more porous.

Fifty weight parts of "Zeolum F-9" ( micropore diameter 10Å and particle diameter less than 5 µ ) of Toso Co., Ltd. as zeolite powder and 25 weight parts of "M Coal CS" ( micropore diameter 20-60 Å and particle diameter less than 10 µ ) of Marubishi Carbon Co., Ltd. as active carbon powder are mixed and stirred into 100 weight parts of "Snowtex O" ( silica content 20 %, particle diameter 10-20 m µ ) of Nissan Chemicals Co., Ltd. as silica sol to obtain a uniform suspension. The above-mentioned honeycomb laminated structure is soaked in this suspension for several minutes and then dried by hot air of about 150 °C for about 60 minutes to obtain a gas adsorbing element. It is preferable to further heat this adsorbing element at 300-350°C for 3-6 hours to increase combining strength of silica sol binder and that among zeolite particles and at the same time to remove impurities adsorbed by and adhering to micropores of active carbon and zeolite. When the total weight of the finished product is 100 %, zeolite content is 38 %, active carbon content is 16 %, silica ( of silica sol ) content is 20 % and ceramic fiber content is 26 %.

### Example 2

Using the same paper as in Example 1 a honeycomb laminated structure is prepared as shown in Fig. 1 just like Example 1. This honeycomb laminated structure is put in a baking furnace and is baked for 5 hours by passing hot air of about 650 °C and of 1 m/sec. velocity with oxygen content less than 10 % through small channels 3 of the honeycomb.

Fifty weight parts of dealuminized Y zeolite "DAY Zeolite" ( composition Na₂O · Al₂O₃ ·∼ 100 SiO₂ · xH₂O, average micropore diameter 7-10 Å, particle diameter about 5-2µ ) of Degussa Aktiengesellschaft, Germany, as zeolite and 25 weight parts of "M Coal CS" of Example 1 as active carbon powder are mixed and stirred into 100 weight parts of "Alumina Sol 520" ( alumina content 20 % ) of Nissan Chemicals Co., Ltd. as alumina sol to obtain a uniform suspension. The above-mentioned honeycomb laminate is soaked in this suspension for several minutes and then dried by passing hot air of about 300 °C through small channels 3 of the honeycomb for about 3 hours to obtain a gas adsorbing element. When the total weight of the finished product is 100 %, zeolite content is 38 %, active carbon content is 17 %, alumina ( of alumina sol ) content is 22 % and ceramic fiber content is 23 %.

### Example 3

Using the same paper as in Example 1 a honeycomb laminated structure is prepared as shown in Fig. 1 just like Example 1. This honeycomb laminated structure is put in a baking furnace and is baked for 5 hours by passing hot air of about 650 °C and of 1.5 m/sec. velocity with oxygen content less than 10 % through small channels 3 of the honeycomb.

Fifty weight parts of "DAY Zeolite" of Degussa Aktiengesellschaft as zeolite and 25 weight parts of "Kuraray Coal GS" powder of Kuraray Chemical Co., Ltd. as active carbon powder are mixed and stirred into 100 weight parts of water or a water-soluble solvent such as ethyl alcohol to obtain a uniform suspension. The above-mentioned honeycomb laminated structure is soaked in this suspension for several minutes and is dried by hot air of about 120 °C for about 60 minutes. Then the honeycomb laminated structure is soaked in silica sol, for example the above-mentioned "Snowtex O" of Nissan Chemicals Co., Ltd., for several minutes and is dried by hot air of about 120°C for about 60 minutes to obtain a gas adsorbing element. When the total weight of the finished product is 100 %, zeolite content is 41 %, active carbon content is 18 %, silica ( of silica sol ) content is 20 % and ceramic fiber content is 21 %.

### Example 4

Using a very porous glass fiber paper consisting of glass fiber 40-80 %, pulp 30-10 % and binder 30-10 % ( ratios by weight ), 0.06-0.3 mm thick and 30-300 g/ m² weight, a honeycomb laminated structure is prepared as shown in Fig. 1 just like Example 1. This honeycomb laminated structure is put in a baking furnace and is baked for 4 hours by passing hot air of about 400°C and of 1.5 m/sec. velocity with oxygen content less than 10 % through small channels of the honeycomb.

Fifty weight parts of "Zeolum F-9", powder of Toso Co., Ltd. as zeolite powder is mixed and stirred into 50 weight parts of "Snowtex O" of Nissan Chemicals Co., Ltd. as silica sol to obtain a uniform suspension. On the other hand 25 weight parts of "M Coal CS" powder of Marubishi Carbon Co., Ltd. as active carbon is mixed and stirred into 50 weight parts of "Snowtex O" to obtain another uniform suspension. The aforesaid honeycomb laminated structure is soaked in either one of the above-mentioned suspensions for several minutes and is dried for 60 minutes by hot air of about 120°C. Then it is soaked in the other suspension for several minutes and is dried for 60 minutes by hot air of about 120°C to obtain a gas adsorbing element. In impregnating a honeycomb laminated structure with dispersed adsorbents, it is preferable to impregnate first the adsorbent with the larger particle diameter of the two. When the total weight of the finished product is 100 %, zeolite content is 40 %, active carbon content is 15 %, silica ( of silica sol ) content is 23 %, and glass fiber and inorganic binder content is 22 %.

The fixed contents can be further increased by impregnating diluted both suspensions alternately and repeatedly.

### Example 5

Using the same ceramic fiber paper as in Example 1, a honeycomb laminated structure is prepared as shown in Fig. 1 just like Example 1. This honeycomb laminated structure is put in a baking furnace and baked for 5 hours by passing hot air of 650 °C and of 1.5 m/sec. velocity with oxygen content less than 10 % through small channels of the honeycomb.

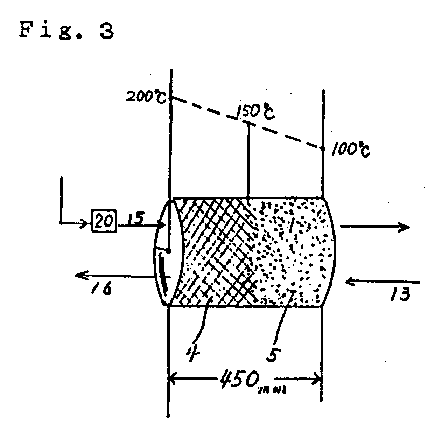

The above-mentioned "Zeolum F-9" powder as zeolite, the above-mentioned "M Coal CS" powder as active carbon and the above-mentioned "Snowtex O" as silica sol are used. Fifty weight parts of the zeolite powder are mixed and stirred into 50 weight parts of the silica sol to obtain a uniform suspension A. And 25 weight parts of the active carbon powder is mixed and stirred into 50 weight parts of the silica sol to obtain another uniform suspension B. The honeycomb laminated structure is divided in two in the direction of small channels of the-honeycomb as shown as 4, 5 in Fig. 3. One of the two parts is soaked in suspension A and dried for 60 minutes by hot air of about 120 °C. Then the other part is soaked in suspension B and dried for 60 minutes by hot air of about 120°C to obtain a gas adsorbing element. When the total weight of the finished product is 100 %, zeolite content is 35 %, active carbon content is 18 %, silica ( of silica sol ) content is 22 %, and ceramic fiber and inorganic binder content is 25 %.

### Example 6

Using a very porous paper consisting of ceramic fiber 42 %, glass fiber 22 %, binder 13 %, pulp 13 % and active carbon powder 10 % ( ratios by weight ), 0.22-0.23 mm thick and 86 g/ m² weight, a honeycomb laminated structure is prepared as shown in Fig. 1 just like Example 1. The above-mentioned paper or formed honeycomb laminated structure is impregnated with silica sol such as the above-mentioned "Snowtex O", or with alumina sol such as the above-mentioned "Alumina Sol 100", or with a dispersion prepared by diluting a mixture of both sols in an optional ratio with the same amount of water, and is then dried to reinforce the paper. The honeycomb laminated structure obtained is put in a baking furnace and is baked for 5 hours by passing hot air of 400 °C and of 1.5 m/sec. velocity with oxygen content less than 10 % through small channels of the honeycomb.

Fifty weight parts of the above-mentioned "Zeolum F-9" as zeolite and 25 weight parts of the above-mentioned "M Coal CS" powder as active carbon are mixed and stirred into 100 weight parts of the above-mentioned "Snowtex O" as silica sol to obtain a uniform suspension. The honeycomb laminated structure is soaked in the above-mentioned suspension for several minutes and is then dried for about 60 minutes by hot air of about 120 °C to obtain a gas adsorbing element. When the total weight of the finished product is 100 %, zeolite content is 23 %, active carbon content is 22 %, silica ( of silica sol ) content is 32 %, and ceramic fiber and inorganic binder content is 23 %. When the inorganic fiber paper used is thus reinforced by silica sol and the like beforehand, it is possible to increase the strength in wet conditions when it is impregnated with dispersion of zeolite and active carbon and also to obtain a physically strong gas-adsorbing element.

### Example 7

Very porous paper, consisting of 65 weight parts of active carbon fiber, 20 weight parts of cellulose fiber, and 15 weight parts of a binder, 0.24 mm thick and 50 g/ m² weight, is impregnated as shown in Example 6 with dilute silica sol with solid content of around 10 % beforehand and is dried. Then this paper is corrugated as shown as 1 in Fig. 2. Said corrugated paper 1 and a flat paper 2 are adhered at the ridged portion of the corrugated paper 1 to obtain a single-faced corrugated sheet. Said single-faced corrugated sheet is wound and laminated as shown in Fig. 1 to obtain a honeycomb laminated structure having many small channels 3 penetrating through between both end surfaces.

This honeycomb laminated structure is impregnated with suspension of the same composition as in Example 1, which is prepared by dispersing 50 weight parts of zeolite and 10 weight parts of active carbon powder in 100 weight parts of silica sol, and is dried to obtain a gas adsorbing element. When the total weight of the gas adsorbing element obtained is 100 %, zeolite content is 30 %, active carbon powder content is 8 %, silica content is 25 %, active carbon fiber content is 27 %, and binder content is 12 %.

### Example 8

The same ceramic fiber paper as in Example 1 is impregnated with the same suspension as in Example 1, which is prepared by dispersing 50 weight parts of zeolite and 10 weight parts of active carbon powder in 100 weight parts of silica sol, and is dried or half-dried. This paper is corrugated as shown as 1 in Fig. 2, and said corrugated paper 1 and a flat paper 2 are adhered at the ridged portion of the corrugated paper 1 to obtain a single-faced corrugated sheet. The single-faced corrugated sheet is wound and laminated as shown in Fig. 1 to obtain a honeycomb laminated structure having many small channels 3 penetrating through between both end surfaces. This honeycomb laminated structure is dried for 3 hours by hot air of 130 °C to obtain a gas adsorbing element.

### Example 9

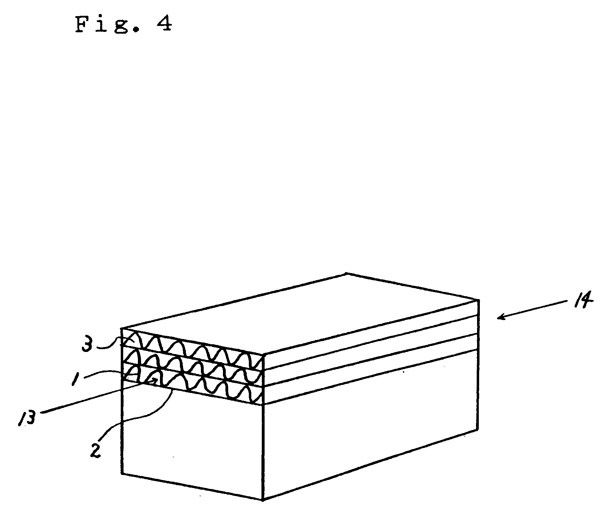

Five hundred weight % of water is added to total 100 % of base material, which consists of 70 -90 weight % of ceramic fiber of silica-alumina group with 2-5 mm of fiber length, 5-10 weight % of pulp, and 5-10 weight % of inorganic or organic binder, to obtain liquid A. On the other hand, 25 weight parts of "Zeolum F-9" powder and 25 weight parts of "DAY Zeolite" as zeolites, and 25 weight parts of "Kuraray Coal GS" powder of Kuraray Chemical Co., Ltd. as active carbon are dispersed in 125 weight parts of "Snowtex O" as silica sol. Fifty weight parts of water is added in the dispersion to obtain liquid B. Liquid B is mixed with liquid A and paper, of 0.22 mm thick and about 160 g/m² weight, is prepared. This paper is formed into a rectangular shaped flat paper 2 and a rectangular shaped corrugated paper 1. Said flat paper 2 and said corrugated paper 1 are alternately laminated putting in order the direction of waves of said corrugated paper 1 to obtain a honeycomb laminated structure of a rectangular shape with many small channels 3 in the same direction penetrating through between both end surfaces as shown in Fig. 4.

This honeycomb laminated structure is put in a baking furnace and baked for 5 hours by passing hot air of 250°C and of 1.5 m/sec. velocity with oxygen content less than 10 % through small channels 3 of the honeycomb to obtain a gas adsorbing element. When the total weight of the gas adsorbing element is 100 %, zeolite content is 30 %, active carbon content is 20 %, silica ( of silica sol ) content is 25 %, and ceramic fiber content is 25 %. It is also possible to further impregnate this gas-adsorbing element later with the same suspension as in Example 1 to increase the quantity of adsorbent carried on the laminate.

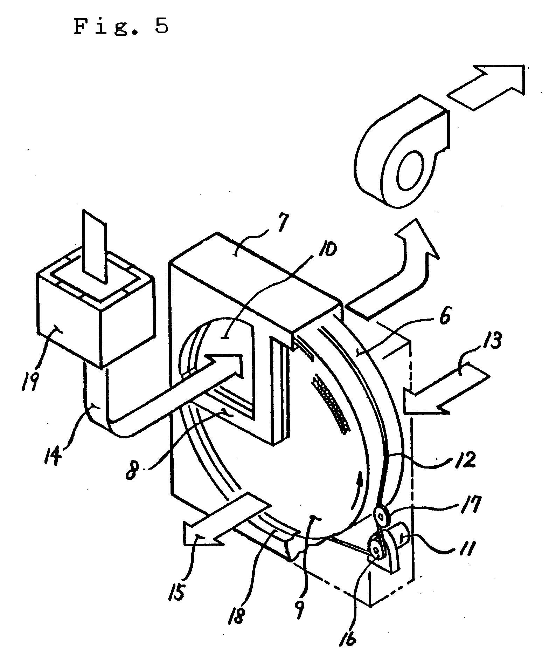

The cylindrical gas-adsorbing element described in Examples 1 through 8 is held for example a shown in Fig. 5 in a gas adsorbing device. The element is rotated at 8-20 rotations per hour, and air or other inert gases containing organic solvent vapor or odor component is passed through it for continuous adsorption and desorption to obtain clean air or other inert gases. Inert gas here means gas consisting only of components that are not adsorbed on the gas-adsorbing element.

As shown in Fig. 5, a gas adsorbing element 6 is held rotatably in a casing 7 and is divided by separators 8, 8 into a process zone 9 and a reactivation zone 10. The gas adsorbing element 6 is rotated by a geared motor 11 and a drive belt 12. Inert gas containing organic solvent vapor and/or odor component such as process air 13 is sent into the process zone 9 and hot reactivation air 14 into the reactivation zone 10 in the other direction. Organic solvent vapor and/or odor material contained in the process air 13 is continuously adsorbed and removed to obtain a clean air 15. The adsorbed organic solvent vapor and/or odor material is desorbed in the reactivation zone 10 by hot reactivation air and thus the gas adsorbing element is continuously reactivated. The organic solvent vapor desorbed and concentrated can be used for fuel or can also be recovered by cooling. In the drawing, 16 is a pulley, 17 is a tension pulley, 18 is a rubber seal, and 19 is a reactivation air heater.

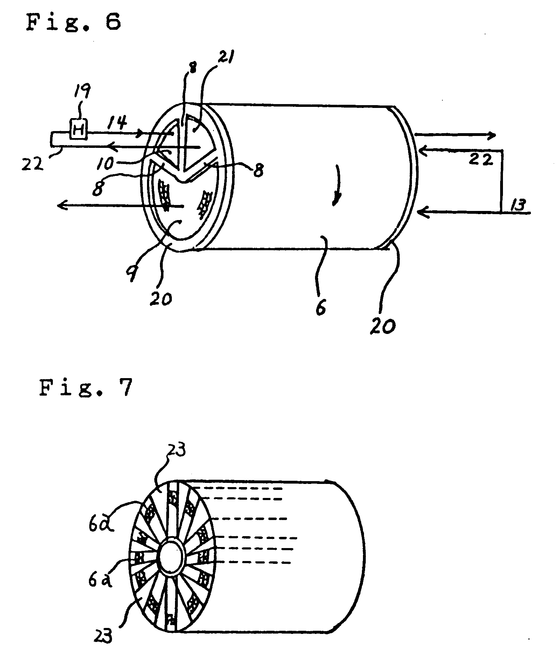

Fig. 6 shows another example of the gas adsorbing device shown in Fig. 5. It has a seal plate 20 with 3 separators 8, 8, 8 sliding on both end surfaces of a gas adsorbing element 6 and dividing them into a process zone 9, a reactivation zone 10 and a purge zone 21. In the use a part 22 of outer air 13 is sent into the purge zone 21 to cool down the element part of the purge zone 21, which has been heated to high temperature in the reactivation zone 10, and to increase adsorption efficiency of the element part in the process zone 9. The air 22 is then heated by the reactivation air heater 19 and is sent into the reactivation zone 10 as reactivation air 14.

In the use of the gas adsorbing element of a rectangular shape shown in Fig. 4, from one end surface where small channels 3 are exposed, an inert gas such as air 13 containing organic solvent vapor or odor material is sent into said element. The organic solvent vapor and/or odor material contained in said gas is adsorbed and removed to obtain clean air or other inert gas. When said adsorbent is to a certain extent saturated with the adsorbed material, high, temperature reactivation gas such as reactivation air 14 is intermittently sent in to desorb the adsorbed material and to reactivate the element part.

The gas adsorbing element 6a of a rectangular shape shown in Fig. 4 can be used also as a rotary type as shown in Fig. 5 by constructing it into a gas adsorbing element of a cylindrical shape using proper filling materials 23 as shown in Fig. 7.

### 6. Effect of the Invention

The gas adsorbing element of the present invention, as is described above, consists of a honeycomb laminated structure reinforced by inorganic fiber paper using zeolite and active carbon in combination as adsorbent together with inorganic binder. Zeolite adsorbs a group of solvent vapors such as methylene dichloride, toluene and gasoline with low efficiency, but can adsorb a group of solvent vapors such as methyl alcohol and ethyl alcohol with high efficiency. Active carbon adsorbs a group of solvent vapors such as methyl alcohol and ethyl alcohol with low efficiency, but can adsorb a group of solvent vapors such as methylene dichloride, toluene and gasoline with high efficiency. Using the gas adsorbing element of the present invention, both groups of solvent vapor or vapors can be adsorbed and removed by the mutual supplement of zeolite and active carbon to get a clean air. Some kinds of solvent vapors such as vapors of xylene, methylethylketone or methyl-isobutyl-ketone generate heat when they are adsorbed on active carbon to make continuous operation impossible. But when the gas adsorbing element of the present invention is used, safe adsorption can be proceeded by adsorbing the organic solvent vapor on zeolite resistant to the generation of adsorption heat. And also though active carbon decreases its adsorption ability for the treating air of temperature above 30°C, but zeolite decreases its adsorption ability very little even if the temperature of the treating air is above 100°C.

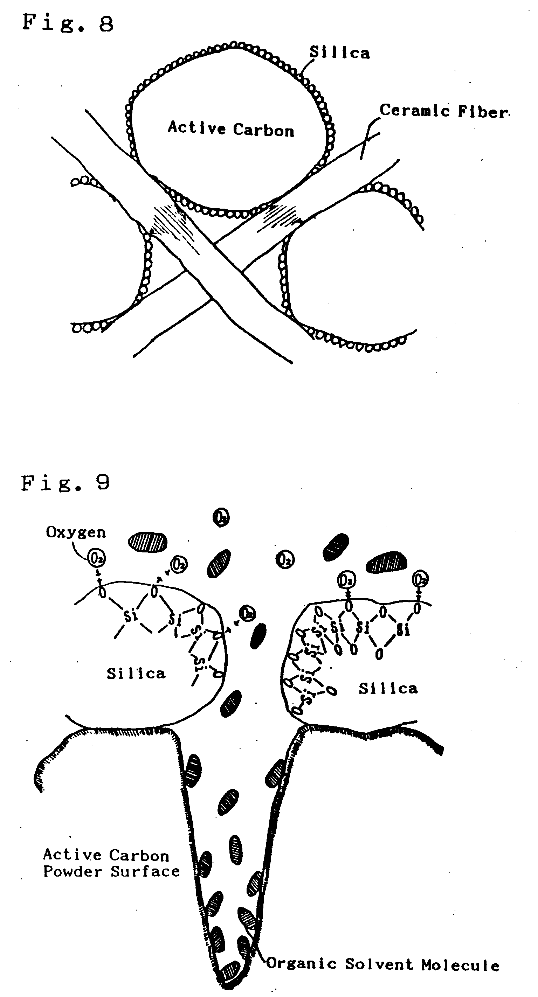

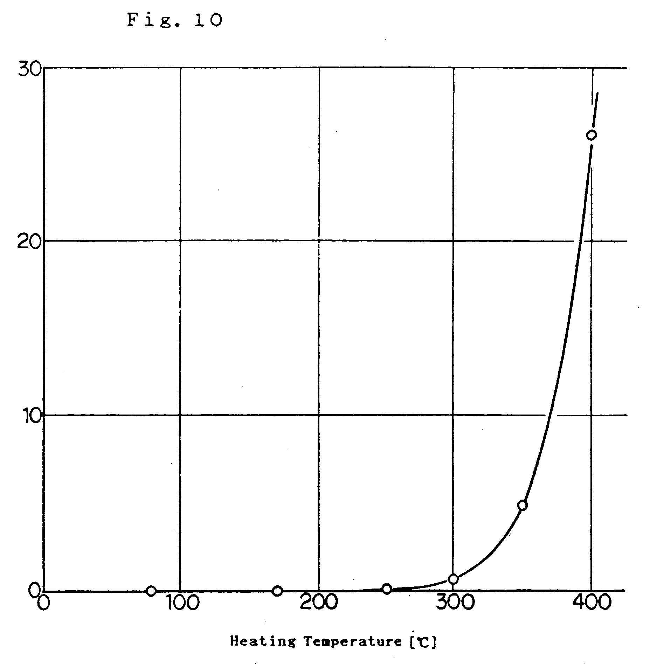

Moreover, though active carbon or active carbon fiber paper has danger of the outbreak of fire by the hot reactivation wind above 130°C, also with participation of adsorption heat generated as mentioned above. In the present invention, surface of micro-particle of active carbon, whose particle size is several µ and which is impregnated and bound in the inorganic fiber paper, is surrounded by and combined with micro-particles of silica from silica sol, whose particle size is several mµ as shown in Fig. 8. And in each silica micro-particle oxygen atoms appear on the surface of micro-particle as shown in Fig. 9, so the oxygen atoms repel oxygen molecules in the air at a very close distance. Therefore, the oxygen molecules in the air can not approach active carbon. So the gas adsorbing element of the present invention has no danger of the outbreak of fire when it is continuously used at the temperature of about 400°C by the restriction of supply of oxygen from the air, though it is supposed that a slow oxidation of active carbon proceeds. By the inventor's experiment, honeycomb-shaped gas adsorbing element of the present invention was put in an electric furnace and heated gradually in an ambient air, the loss rate of weight of active carbon was very little until 300 °C as shown as in Fig. 10, but the loss of weight started suddenly at the temperature above 350 °C, and at 500°C the active carbon disappeared completely in about 1 hour so that the elements consisted of ceramic paper and zeolite only. On the other hand, molecules of organic solvent vapor and odor materials can intrude into the micropores of active carbon without any hindrance, and adsorbed on the micropores of the active carbon.

The inorganic fiber paper contains organic fiber such as pulp and also organic binder for its manufacture. It is possible totally to get rid of danger of the outbreak of fire while in use by giving high temperature treatment with air having decreased oxygen content in the stage of paper, of a honeycomb laminated structure or of a finished product to remove organic components. At the same time, as active carbon powder and zeolite are firmly combined with inorganic fiber paper by inorganic binder, there is neither carrying-over of zeolite powder and active carbon powder, caused by passing of process air or reactivation air through honeycomb channels while in use, nor efficiency decrease of the gas adsorbing element accompanied with the carrying-over.

In Example 2 as active carbon, which is hydrophobic, as well as dealuminized Y zeolite, is used as adsorbent, the gas adsorbing element never adsorbs humidity and can adsorb and remove organic solvent vapor and/or odor material without problem even if the process gas is highly humid.

The method shown in Example 4 of impregnating a honeycomb laminated structure with the dispersion of zeolite and inorganic binder and with the dispersion of active carbon and inorganic binder in two stages is effective when there is a difference between particle diameters of zeolite and active carbon in the dispersion or when the ratio of quantities of zeolite and active carbon adhered to the honeycomb laminated structure is wanted to be controlled. That is, when there is a difference between particle diameters of zeolite and active carbon in the dispersion, if the honeycomb laminated structure is impregnated in a single stage of impregnation with single dispersion of mixture of zeolite and active carbon described in Example 1 or in Example 3, an adsorbent with a smaller particle diameter adheres with priority and adhesion of adsorbent with a larger diameter particle is obstructed: But when it is impregnated separately in the two-stage method described in Example 4, the ratio of quantity of each adsorbent adhered can suitably be controlled. In this case the same effect can be obtained when a honeycomb laminated structure is impregnated with dispersion of zeolite and with dispersion of active carbon in two stage, and then with dispersion of inorganic binder.

The gas adsorbing element shown in Example 5, fabricated by impregnating a part ( in the direction of small channels ) of the honeycomb laminated structure with dispersion of zeolite and inorganic binder and other part with dispersion of active carbon and inorganic binder to fix them to the honeycomb, is suitable effectively to use heat energy necessary for desorption and reactivation. Zeolite has micropores of 6-10 Å diameter and high temperature of 150-200°C is necessary to desorb adsorbed material and to reactivate zeolite. On the other hand, active carbon has micropores of 20-100 Å and desorption of adsorbed material and reactivation of active carbon can be proceeded at a relatively low temperature of 70-100 °C. That is, when 4 in Fig. 3 is the part impregnated and fixed with zeolite and 5 with active carbon, the temperature of hot reactivation air 15, which is passed from the 4 side toward the 5 side as shown in the drawing, gradually descreases to show a temperature slope as 200°C→150 °C→100 °C. But in the part 4 zeolite is fully desorbed and reactivated by hot reactivation air and then in the part 5 active carbon is fully desorbed and reactivated by reactivation air of a little lower temperature. Zeolite has a higher heat resistance than active carbon. Even if hot air of around 800°C is passed continuously, zeolite is not deteriorated and its adsorption efficiency recovers. Therefore this method is especially advantageous in using high temperature reactivation air. In this case same effect can be obtained when one part of a honeycomb laminated structure is impregnated with a dispersion of zeolite, the other part with a dispersion of active carbon, and then the whole of the honeycomb laminated structure is impregnated with dispersion of inorganic binder such as silica sol and alumina sol to reinforce the gas adsorbing element.

In Examples 6 and 7 the inorganic fiber paper or the honeycomb laminated structure was impregnated with a dilute dispersion of inorganic binder such as silica sol and alumina sol before the next process. This impregnation of inorganic binder increases the physical strength, especially the strength in wet conditions of the inorganic fiber paper or of the honeycomb laminated structure to make easier the following impregnation process and also to contribute to an increase in the physical strength of the finished product, i.e., the gas adsorbing element. This effect of increasing the physical strength of the finished product is utterly the same as in the case of impregnation with dispersion of inorganic binder after impregnation with dispersion of adsorbent as in Example 3, and is especially advantageous in using the gas adsorbing element in high pressure or in the presence of a pressure difference.

In Example 7 a honeycomb laminated structure was formed using active carbon fiber paper, and zeolite, active carbon and inorganic binder were firmly adhered to this. Therefore the quantity of active carbon that works as adsorbent is more than the cases in the other examples and it also has an effect of giving incombustibility and increasing heat resistance of the gas adsorbing element by inorganic binder as mentioned above.

In Example 9, adsorbents were mixed with the components of paper such as the inorganic fiber, etc., and the paper was prepared for a honeycomb laminated structure from the mixture. Therefore it has an effect of obtaining the paper containing more adsorbent than in the method of impregnating paper or a honeycomb laminated structure with adsorbent in the form of dispersion.

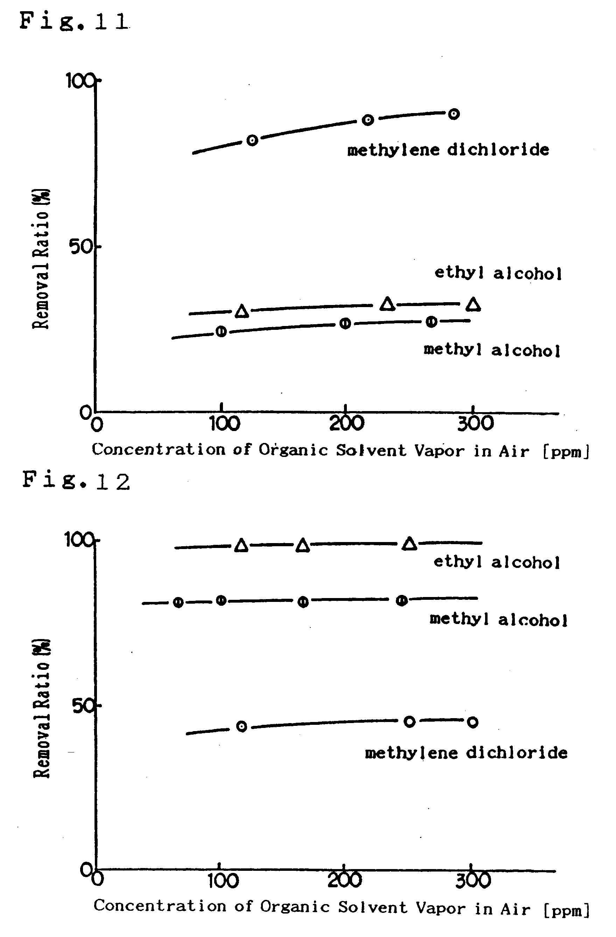

Fig. 11, Fig. 12 and Fig. 13 respectively show results of gas adsorption using a gas adsorbing element of the same conditions as Example 1 only with active carbon powder as adsorbent of 54 weight % ( as compared with the weight of element ), a gas adsorbing element of the same conditions as Example 1 only with zeolite ( "Zeolum F-9" or "DAY Zeolite" ) as adsorbent of 54 weight %, and a gas adsorbing element manufactured in Example 1, treating airs containing three kinds of organic solvent vapor of methylene dichloride, methyl alcohol and ethyl alcohol in the device shown in Fig. 6 under the conditions of:

| | | |
|---|---|---|
| Process air temperature at inlet | 15 °C | Wind velocity 2 m/sec. |

| Reactivation air temperature at inlet | | |
|---|---|---|
| ( containing active carbon ) | 130 °C | ibid. |
| ( containing zeolite ) | 160 °C | ibid. |
| ( containing active carbon and zeolite ) | 180 °C | ibid. |
| ( cf. Fig. 3 ) | | |

Gas adsorbing element rotating speed 8 r.p.h.

Concentration ratio ( ratio of reactivation air volume to process air volume ) 1 : 10.

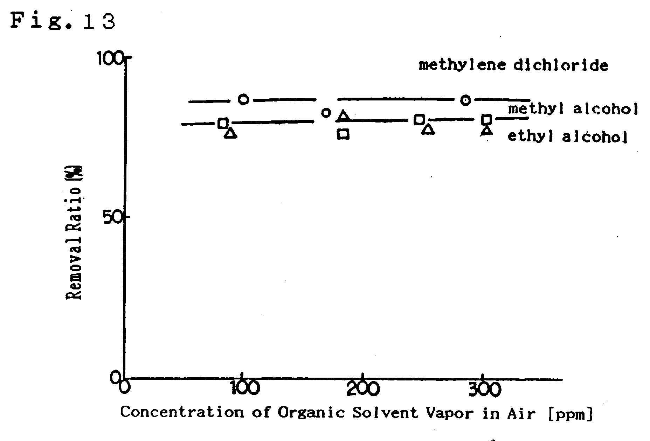

In the drawings the abscissa is concentration [ ppm ] of organic solvent vapor in the process air at inlet and the ordinate is removal ratio, i.e., the value [ % ] of ratio of organic solvent vapor concentration [ ppm ] in the process air at outlet to that in the process air at inlet subtracted from 1. Fig. 11 and Fig. 12 show data of the process air containing one kind in the above 3 kinds of organic solvent vapor, and Fig. 13 shows data of the process air containing the same amount of the above 3 kinds of organic solvent vapors in mixture.

## Claims

1. A method of manufacturing a gas adsorbing element, characterised by forming a honeycomb-shaped laminate, impregnating said honeycomb-shaped laminate with an inorganic binder comprising powder of zeolite and active carbon powder, and drying the laminate.

2. A method according to Claim 1, characterised in that said honeycomb-shaped laminate is impregnated with a dispersion of an inorganic binder in which powder of zeolite and active carbon powder are dispersed.

3. A method according to Claim 1 or Claim 2, characterised in that the honeycomb-shaped laminate is impregnated with powder of zeolite and active carbon powder, dried, impregnated with a dispersion of an inorganic binder, and dried again.

4. A method according to Claim 1 or Claim 2, characterised by impregnating said honeycomb-shaped laminate with a suspension of an inorganic binder dispersion in which zeolite powder is dispersed, drying the laminate, impregnating said honeycomb-shaped laminate with a suspension of an inorganic binder dispersion in which active carbon powder is dispersed, and drying the laminate.

5. A method according to Claim 1 or Claim 2, characterised by impregnating said honeycomb-shaped laminate with a suspension of an inorganic binder dispersion in which active carbon powder is dispersed, drying the laminate, impregnating said honeycomb-shaped laminate with a suspension of an inorganic binder dispersion in which zeolite powder is dispersed, and drying the laminate.

6. A method according to Claim 4 or Claim 5, characterised in that a dilute suspension of an inorganic binder dispersion in which zeolite powder is dispersed and a dilute suspension of an inorganic binder dispersion in which active carbon powder is dispersed are impregnated into the honeycomb-shaped laminate alternately.

7. A method according to Claim 6, characterised by the impregnation being carried out repeatedly.

8. A method according to any preceding claim, characterised by dividing said honeycomb-shaped laminate into two parts in the direction of small channels, impregnating one part with a suspension of an inorganic binder dispersion in which zeolite powder is dispersed, drying the laminate, impregnating the other part with a suspension of an inorganic binder in which active carbon powder is dispersed, and drying the laminate.

9. A method according to any of claims 1 to 8, characterised in that said inorganic binder dispersion comprises silica sol or alumina sol.

10. A method according to any of claims 1 to 9, characterised in that the honeycomb-shaped laminate is baked by passing a hot air containing a diminished amount of oxygen through channels of the honeycomb-shaped laminate before impregnation.

11. A method according to any of claims 1 to 10, characterised in that an inorganic fiber paper is dipped in an inorganic binder dispersion containing a solid content and dried before forming said inorganic fiber paper to said honeycomb-shaped laminate.

12. A method according to any of claims 1 to 10, characterised in that said honeycomb-shaped laminate is dipped in an inorganic binder dispersion containing a solid content and dried before impregnation.

13. A method according to any of Claims 9 to 12, characterised in that the honeycomb-shaped laminate is baked by passing hot air containing a diminished amount of oxygen through channels of the honeycomb-shaped laminate before impregnation.

14. A method according to Claim 1, characterised by impregnating an inorganic fiber paper with an inorganic binder dispersion in which zeolite powder and active carbon powder are dispersed, drying or part-drying the impregnated paper, forming a single-faced corrugated sheet from the impregnated paper, and forming a honeycomb by laminating said single-faced corrugated sheet.

15. A method according to Claim 12, characterised in that said inorganic binder dispersion comprises silica sol, or alumina sol, or a mixture thereof.

16. A method according to Claim 1, characterised by manufacturing an inorganic fiber paper by adding zeolite powder, active carbon powder and a binder in the raw materials of paper, forming a single-faced corrugated sheet from said inorganic fiber paper, and laminating said single-faced corrugated sheet to form a honeycomb.

17. A method according to Claim 16, characterised in that said binder comprises inorganic binders, organic binders, or a mixture thereof.

18. A method according to any of claims 14 to 17, characterised in that the honeycomb-shaped laminate is baked by passing hot air through channels of the honeycomb-shaped laminate.

19. A method according to any preceding claim, characterised in that said inorganic fiber paper is from 0.08 to 0.3mm thick and weighs from 30 to 200 g/m².

20. A method according to any preceding claim, characterised in that said inorganic fiber paper comprises ceramic fiber.

21. A method according to any of claims 1 to 19, characterised in that said inorganic fiber paper comprises glass fiber.

22. A method according to any of claims 1 to 19, characterised in that said inorganic fiber paper comprises active carbon fiber.

23. A method according to any preceding claim, characterised in that said inorganic fiber paper comprises active carbon powder.

24. A gas adsorbing element comprising honeycomb-shaped inorganic fiber paper, characterised in that zeolite powder and active carbon powder are exposed on the surface of channels of the honeycomb, and said zeolite powder and said active carbon powder are combined firmly with said inorganic fiber paper by the solid content of an inorganic binder.

25. A gas adsorbing element according to Claim 24, characterised in that said inorganic binder comprises silica sol or alumina sol, or a mixture thereof.

26. A method of gas adsorption characterised by passing a process gas containing an active gas and a reactivating gas alternately, over a gas adsorbing element according to Claim 24 or 25, to adsorb and remove said active gas contained in said process gas.

27. A method of gas adsorption according to Claim 26, comprising rotating said gas adsorbing element according to Claim 24 or Claim 25, and proceeding the adsorption and the desorption continuously.

## Patentansprüche

1. Verfahren zur Herstellung eines Gasadsorptionselements, gekennzeichnet durch Formen eines wabenförmigen Laminats. Imprägnieren des wabenförmigen Laminats mit einem anorganischen Bindemittel, das Zeolithpulver und Aktivkohlepulver aufweist, und Trocknen des Laminats.

2. Verfahren nach Anspruch 1, dadurch gekennzeichnet, daß das wabenförmige Laminat mit einer Dispersion eines anorganischen Bindemittels imprägniert wird, in dem Zeolithpulver und Aktivkohlepulver dispergiert sind.

3. Verfahren nach Anspruch 1 oder Anspruch 2, dadurch gekennzeichnet, daß das wabenförmige Laminat mit Zeolithpulver und Aktivkohlepulver imprägniert, getrocknet, mit einer Dispersion eines anorganischen Bindemittels imprägniert und nochmals getrocknet wird.

4. Verfahren nach Anspruch 1 oder Anspruch 2, gekennzeichnet durch Imprägnieren des wabenförmigen Laminats mit einer Suspension einer Dispersion eines anorganischen Bindemittels, in der Zeolithpulver dispergiert ist, Trocknen des Laminats. Imprägnieren des wabenförmigen Laminats mit einer Suspension einer Dispersion eines anorganischen Bindemittels, in der Aktivkohlepulver dispergiert ist, und Trocknen des Laminats.

5. Verfahren nach Anspruch 1 oder Anspruch 2, gekennzeichnet durch Imprägnieren des wabenförmigen Laminats mit einer Suspension einer Dispersion eines anorganischen Bindemittels, in der Aktivkohlepulver dispergiert ist. Trocknen des Laminats. Imprägnieren des wabenförmigen Laminats mit einer Suspension einer Dispersion eines anorganischen Bindemittels, in der Zeolithpulver dispergiert ist, und Trocknen des Laminats.

6. Verfahren nach Anspruch 4 oder Anspruch 5, dadurch gekennzeichnet, daß das wabenförmige Laminat abwechselnd mit einer verdünnten Suspension einer Dispersion eines anorganischen Bindemittels, in der Zeolithpulver dispergiert ist, und einer verdünnten Suspension einer Dispersion eines anorganischen Bindemittels imprägniert wird, in der Aktivkohlepulver dispergiert ist.

7. Verfahren nach Anspruch 6, dadurch gekennzeichnet, daß das Imprägnieren wiederholt ausgeführt wird.

8. Verfahren nach einem der vorstehenden Ansprüche gekennzeichnet durch Unterteilen des wabenförmigen Laminats in zwei Teile in Richtung kleiner Kanäle. Imprägnieren eines Teils mit einer Suspension einer Dispersion eines anorganischen Bindemittels, in der Zeolithpulver dispergiert ist, Trocknen des Laminats. Imprägnieren des anderen Teils mit einer Suspension eines anorganischen Bindemittels, in der Aktivkohlepulver dispergiert ist, und Trocknen des Laminats.

9. Verfahren nach einem der Ansprüche 1 bis 8, dadurch gekennzeichnet, daß die Dispersion des anorganischen Bindemittels Silicasol oder Alumosol aufweist.

10. Verfahren nach einem der Ansprüche 1 bis 9, dadurch gekennzeichnet, daß das wabenförmige Laminat ausgeheizt wird, indem vor dem Imprägnieren Heißluft mit vermindertem Sauerstoffanteil durch Kanäle des wabenförmigen Laminats geleitet wird.

11. Verfahren nach einem der Ansprüche 1 bis 10, dadurch gekennzeichnet, daß ein Papier aus anorganischen Fasern in eine Dispersion eines anorganischen Bindemittels mit Feststoffanteil getaucht und getrocknet wird, bevor aus dem Papier aus anorganischen Fasern das wabenförmige Laminat geformt wird.

12. Verfahren nach einem der Ansprüche 1 bis 10, dadurch gekennzeichnet, daß das wabenförmige Laminat in eine Dispersion eines anorganischen Bindemittels mit Feststoffanteil getaucht und vor dem Imprägnieren getrocknet wird.

13. Verfahren nach einem der Ansprüche 9 bis 12, dadurch gekennzeichnet, daß das wabenförmige Laminat ausgeheizt wird, indem vor dem Imprägnieren Heißluft mit vermindertem Sauerstoffanteil durch Kanäle des wabenförmigen Laminats geleitet wird.

14. Verfahren nach Anspruch 1, gekennzeichnet durch Imprägnieren eines Papiers aus anorganischen Fasern mit einer Dispersion eines anorganischen Bindemittels, in der Zeolithpulver und Aktivkohlepulver dispergiert sind, Trocknen oder teilweises Trocknen des imprägnierten Papiers, Formen eines einflächigen gewellten Bogens aus dem imprägnierten Papier und Formen einer Wabe durch Laminieren des einflächigen gewellten Bogens.

15. Verfahren nach Anspruch 12, dadurch gekennzeichnet, daß die Dispersion des anorganischen Bindemittels Silicasol oder Alumosol oder ein Gemisch daraus aufweist.

16. Verfahren nach Anspruch 1, gekennzeichnet durch Herstellen eines Papiers aus anorganischen Fasern durch Zusatz von Zeolithpulver, Aktivkohlepulver und eines Bindemittels zu den Rohmaterialien des Papiers, Formen eines einflächigen gewellten Bogens aus dem Papier aus anorganischen Fasern und Laminieren des einflächigen gewellten Bogens zu einer Wabe.

17. Verfahren nach Anspruch 16, dadurch gekennzeichnet, daß das Bindemittel anorganische Bindemittel, organische Bindemittel oder ein Gemisch daraus aufweist.

18. Verfahren nach einem der Ansprüche 14 bis 17, dadurch gekennzeichnet, daß das wabenförmige Laminat mittels Durchleiten von Heißluft durch Kanäle des wabenförmigen Laminats ausgeheizt wird.

19. Verfahren nach einem der vorstehenden Ansprüche dadurch gekennzeichnet, daß das Papier aus anorganischen Fasern 0.08 bis 0.3 mm dick ist und 30 bis 200 g/m² wiegt.

20. Verfahren nach einem der vorstehenden Ansprüche, dadurch gekennzeichnet, daß das Papier aus anorganischen Fasern keramische Fasern aufweist.

21. Verfahren nach einem den Ansprüche 1 bis 19, dadurch gekennzeichnet, daß das Papier aus anorganischen Fasern Glasfasern aufweist.

22. Verfahren nach einem der Ansprüche 1 bis 19, dadurch gekennzeichnet, daß das Papier aus anorganischen Fasern Aktivkohlefasern aufweist.

23. Verfahren nach einem der vorstehenden Ansprüche, dadurch gekennzeichnet, daß das Papier aus anorganischen Fasern Aktivkohlepulver aufweist.

24. Gasadsorptionselement mit einem wabenförmigen Papier aus anorganischen Fasern, dadurch gekennzeichnet, daß Zeolithpulver und Aktivkohlepulver an der Oberfläche von Wabenkanälen freiliegen und daß das Zeolithpulver und das Aktivkohlepulver durch den Feststoffanteil eines anorganischen Bindemittels fest mit dem Papier aus anorganischen Fasern verbunden sind.

25. Gasadsorptionselement nach Anspruch 24, dadurch gekennzeichnet, daß das anorganische Bindemittel Silicasol oder Alumosol oder ein Gemisch daraus aufweist.

26. Gasdasorptionsverfahren, dadurch gekennzeichnet, daß ein Prozeßgas, das abwechselnd ein aktives Gas und ein reaktivierendes Gas enthält, über ein Gasadsorptionselement gemäß Anspruch 24 oder 25 geleitet wird, um das in dem Prozeßgas enthaltene aktive Gas zu adsorbieren und wieder zu entfernen.

27. Gasadsorptionsverfahren nach Anspruch 26, wobei das Gasadsorptionselement nach Anspruch 24 oder Anspruch 25 gedreht und die Adsorption und die Desorption fortlaufend ausgeführt werden.

## Revendications

1. Procédé de fabrication d'un élément adsorbant des gaz, caractérisé par la formation d'un stratifié en forme de nids d'abeilles, l'imprégnation dudit stratifié en forme de nids d'abeilles avec un liant inorganique comprenant une poudre de zéolite et une poudre de charbon actif, et le séchage du stratifié.

2. Procédé selon la revendication 1, caractérisé en ce que ledit stratifié en forme de nids d'abeilles est imprégné avec une dispersion d'un liant inorganique dans laquelle une poudre de zéolite et une poudre de charbon actif sont dispersées.

3. Procédé selon la revendication 1 ou la revendication 2, caractérisé en ce que le stratifié en forme de nids d'abeilles est imprégné avec de la poudre de zéolite et de la poudre de charbon actif, séché, imprégné avec une dispersion d'un liant inorganique, et séché à nouveau.

4. Procédé selon la revendication 1 ou la revendication 2, caractérisé par l'imprégnation dudit stratifié en forme de nids d'abeilles avec une suspension d'une dispersion de liant inorganique dans laquelle de la poudre de zéolite est dispersée, le séchage du stratifié, l'imprégnation dudit stratifié en forme de nids d'abeilles avec une suspension d'une dispersion de liant inorganique dans laquelle de la poudre de charbon actif est dispersée, et le séchage du stratifié.

5. Procédé selon la revendication 1 ou la revendication 2, caractérisé par l'imprégnation dudit stratifié en forme de nids d'abeilles avec une suspension d'une dispersion de liant inorganique dans laquelle de la poudre de charbon actif est dispersée, le séchage du stratifié, l'imprégnation dudit stratifié en forme de nids d'abeilles avec une suspension d'une dispersion de liant inorganique dans laquelle de la poudre de zéolite est dispersée, et le séchage du stratifié.

6. Procédé selon la revendication 4 ou la revendication 5, caractérisé en ce qu'une suspension diluée d'une dispersion de liant inorganique dans laquelle de la poudre de zéolite est dispersée et une suspension diluée d'une dispersion de liant inorganique dans laquelle de la poudre de charbon actif est dispersée sont imprégnées dans le stratifié en forme de nids d'abeilles, en alternance.

7. Procédé selon la revendication 6, caractérisé en ce que l'imprégnation est effectuée à plusieurs reprises.

8. Procédé selon l'une quelconque des revendications précédentes, caractérisé par la division dudit stratifié en nids d'abeilles en deux parties dans la direction des petits canaux, l'imprégnation d'une partie avec une suspension d'une dispersion de liant inorganique dans laquelle de la poudre de zéolite est dispersée, le séchage du stratifié, l'imprégnation de l'autre partie avec une suspension d'un liant inorganique dans laquelle de la poudre de charbon actif est dispersée, et le séchage du stratifié.

9. Procédé selon l'une quelconque des revendications 1 à 8, caractérisé en ce que ladite dispersion de liant inorganique comprend un sol de silice ou un sol d'alumine.

10. Procédé selon l'une quelconque des revendications 1 à 9, caractérisé en ce que le stratifié en forme de nids d'abeilles est cuit en faisant passer de l'air chaud contenant une quantité diminuée d'oxygène au travers des canaux du stratifié en forme de nids d'abeilles avant l'imprégnation.

11. Procédé selon l'une quelconque des revendications 1 à 10, caractérisé en ce qu'un papier à fibres inorganiques est trempé dans une dispersion de liant inorganique contenant une teneur en solide et est séché avant de former ledit papier à fibres inorganiques en ledit stratifié en forme de nids d'abeilles.

12. Procédé selon lune quelconque des revendications 1 à 10, caractérisé en ce que ledit stratifié en forme de nids d'abeilles est trempé dans une dispersion de liant inorganique contenant une teneur en solide et est séché avant l'imprégnation.

13. Procédé selon l'une quelconque des revendications 9 à 12, caractérisé en ce que le stratifié en forme de nids d'abeilles est cuit en faisant passer de l'air chaud contenant une quantité diminuée d'oxygène au travers des canaux du stratifié en forme de nids d'abeilles avant l'imprégnation.

14. Procédé selon la revendication 1, caractérisé par l'imprégnation d'un papier à fibres inorganiques avec une dispersion de liant inorganique dans laquelle de la poudre de zéolite et de la poudre de charbon actif sont dispersées, le séchage ou le séchage partiel du papier imprégné, la formation d'une feuille ondulée à une face à partir du papier imprégné, et la formation d'un nid d'abeilles en stratifiant ladite feuille ondulée à une face.

15. Procédé selon la revendication 12, caractérisé en ce que ladite dispersion de liant inorganique comprend du sol de silice ou du sol d'alumine, ou un mélange de ceux-ci.

16. Procédé selon la revendication 1, caractérisé par la fabrication d'un papier à fibres inorganiques par l'addition de poudre de zéolite, de poudre de charbon actif et d'un liant dans les matières premières du papier, la formation d'une feuille ondulée à une face à partir dudit papier à fibres inorganiques, et là stratification de ladite feuille ondulée à une face pour former un nid d'abeilles.

17. Procédé selon la revendication 16, caractérisé en ce que ledit liant comprend les liants inorganiques, les liants organiques ou un mélange de ceux-ci.

18. Procédé selon l'une quelconque des revendications 14 à 17, caractérisé en ce que le stratifié en forme de nids d'abeilles est cuit en faisant passer de l'air chaud au travers des canaux du stratifié en forme de nids d'abeilles.

19. Procédé selon l'une quelconque des revendications précédentes caractérisé en ce que ledit papier à fibres inorganiques est de 0.08 à 0.3 mm d'épaisseur et pèse de 30 à 200 g/m².

20. Procédé selon l'une quelconque des revendications précédentes, caractérisé en ce que ledit papier à fibres inorganiques comprend des fibres céramiques.

21. Procédé selon l'une quelconque des revendications 1 à 19, caractérisé en ce que ledit papier à fibres inorganiques comprend des fibres de verre.

22. Procédé selon l'une quelconque des revendications 1 à 19, caractérisé en ce que ledit papier à fibres inorganiques comprend des fibres de charbon actif.

23. Procédé selon l'une quelconque des revendications précédentes, caractérisé en ce que ledit papier à fibres inorganiques comprend de la poudre de charbon actif.

24. Élément adsorbant des gaz, comprenant un papier à fibres inorganiques en forme de nids d'abeilles, caractérisé en ce que la poudre de zéolite et la poudre de charbon actif sont exposées sur la surface des canaux du nid d'abeilles, et en ce que ladite poudre de zéolite et ladite poudre de charbon actif sont combinées fermement avec ledit papier à fibres inorganiques par la teneur en solide d'un liant inorganique.

25. Élément adsorbant des gaz selon la revendication 24, caractérisé en ce que ledit liant inorganique comprend du sol de silice ou du sol d'alumine, ou un mélange de ceux-ci.

26. Procédé d'adsorption de gaz, caractérisé par le passage d'un gaz à traiter contenant un gaz actif et un gaz réactivant en alternance, sur un élément adsorbant des gaz selon la revendication 24 ou 25, pour adsorber et éliminer ledit gaz actif contenu dans ledit gaz à traiter.

27. Procédé d'adsorption de gaz selon la revendication 26, comprenant la rotation dudit élément adsorbant des gaz selon la revendication 24 ou la revendication 25, et la réalisation de l'adsorption et de la désorption en continu.
